Europäisches Patentamt

(19) European Patent Office

Office européen des brevets

(11) Numéro de publication: **0 140 718**
**B1**

(12) **FASCICULE DE BREVET EUROPEEN**

(45) Date de publication du fascicule du brevet:
07.01.88

(21) Numéro de dépôt: **84401487.8**

(22) Date de dépôt: **13.07.84**

(51) Int. Cl.⁴: **G 06 F 7/544**

(54) Cellule et circuit de calcul à architecture systolique utilisant de telles cellules.

(30) Priorité: **22.07.83 FR 8312171**

(43) Date de publication de la demande:
**08.05.85 Bulletin 85/19**

(45) Mention de la délivrance du brevet:
**07.01.88 Bulletin 88/1**

(84) Etats contractants désignés:
**DE GB IT NL**

(56) Documents cités:
**FR - A - 2 371 014**

**IEEE COMPUTER SOCIETY WORKSHOP ON
COMPUTER ARCHITECTURE FOR PATTERN ANALYSIS
AND IMAGE DATABASE MANAGEMENT", Hot Springs,
Virginia, 11-13 novembre 1981, IEEE Inc.; H.T. KUNG et
al.: "A systolic 2-D convolution chip", pages 159-160
ELECTRONICS, volume 52, no. 26, décembre 1979,
(NEW YORK, US); L. SCHIRM: "Packing a signal
processor onto a single digital board", pages 109-115**

(73) Titulaire: **THOMSON-CSF, 173, Boulevard Haussmann,
F-75379 Paris Cédex 08 (FR)**

(72) Inventeur: **Muller, Marc, THOMSON-CSF SCPI 173, bld
Haussmann, F-75379 Paris Cedex 08 (FR)**
Inventeur: **Bergeon, Gérard, THOMSON-CSF
SCPI 173, bld Haussmann, F-75379 Paris Cedex 08 (FR)**
Inventeur: **Chéné, Arnaud, THOMSON-CSF SCPI 173, bld
Haussmann, F-75379 Paris Cedex 08 (FR)**

(74) Mandataire: **Benoit, Monique et al, THOMSON-CSF
SCPI 19, avenue de Messine, F-75008 Paris (FR)**

# Description

La présente invention concerne les calculs utilisant de forts débits de données, comme par exemple le traitement d'images. La présente invention concerne plus particulièrement une cellule et un circuit de calcul à architecture systolique utilisant de telles cellules.

Pour augmenter la vitesse de calcul, il est connu, d'une part, de diminuer le temps d'exécution des opérations élémentaires, et d'autre part, d'exécuter un grand nombre d'opérations simultanément.

L'architecture systolique décrite dans H.T. Kung «Why Systolic Architectures» IEEE Computer de janvier 1982, se prête particulièrement bien à la réalisation de circuits exécutant un grand nombre d'opérations simultanées. Cette architecture utilise le traitement en parallèle et le traitement «pipeline». Des cellules de calcul, avantageusement identiques, sont connectées les uns à la sortie des autres. On dit qu'elles sont mises en cascade. On dit qu'un circuit comportant des cellules mises en cascade utilise une architecture «pipeline» quand les résultats de calcul d'une cellule sont utilisés comme des donnés de calcul dans la cellule suivante. Les mêmes données utilisées aux divers stades du calcul, ne sont transférées qu'une fois d'une mémoire externe au circuit au début de chaque calcul. La diminution du nombre d'accès à la mémoire diminue le temps de calcul.

Quatre types de cellules cascadables et leurs variantes décrits ci-dessous sont respectivement optimisés pour divers types de calculs comme par exemple le calcul de convolution, le calcul de corrélation ou le calcul de filtrage autorégressif.

L'exécution de ces calculs exigeait donc la réalisation de quatre circuits. Or, ces circuits sont souvent réalisés sous la forme de circuits intégrés, LSI ou VLSI. Pour de tels circuits, très spécialisés et voués à une faible diffusion, une part importante du prix provient de la conception et de la mise au point du circuit. L'invention se propose de réaliser une cellule unique qui, par un jeu de commutations internes, permet de jouer le rôle successivement des quatre types de cellules.

L'invention a principalement pour objet une cellule de calcul caractérisée par le fait qu'elle comprend notamment une ligne de données transmettant des informations comportant deux registres mémoires; une ligne relie la sortie d'un de ces registres mémoire à un multiplexeur placé à l'entrée de l'autre registre mémoire de la ligne de transmission d'informations; une ligne relie un point intermédiaire entre lesdits registres mémoires à un multiplieur; une autre ligne de données comportant un registre mémoire est reliée à une autre entrée du multiplieur; le mulitplieur est relié à l'additionneur, l'additionneur est relié à un registre mémoire qui est lui-même relié par deux lignes de transmission d'informations, à deux commutateurs effectuant la connexion avec une ligne de transmission d'informations le registre mémoire, se trouvant à la sortie de l'additionneur, est relié à un multiplexeur constituant une entrée de

l'additionneur, ce multiplexeur est relié par une ligne de transmission d'informations auxdits commutateurs.

L'invention se propose aussi de fournir des circuits électriques comprenant lesdites cellules de calcul.

L'invention sera mieux comprise au moyen de la description ci-après et des figures annexées, données comme des exemples non limitatifs parmi lesquels:
- la figure 1, est un schéma d'une cellule R1;
- la figure 2, est un schéma d'une cellule R2;
- la figure 3, est un schéma d'une cellule W1;
- la figure 4, est un schéma d'une variante de réalisation de la cellule W1;
- la figure 5, est un schéma d'une cellule W2;
- la figure 6 est un schéma d'une variante de réalisation de la cellule W2;
- la figure 7 est un schéma de la cellule RW selon l'invention;
- la figure 8, est un schéma d'une variante de réalisation de la cellule RW selon l'invention;
- la figure 9 est un schéma d'une partie d'une troisième réalisation de la cellule RW selon l'invention;
- la figure 10 est un schéma d'un circuit utilisant des cellules selon l'invention.

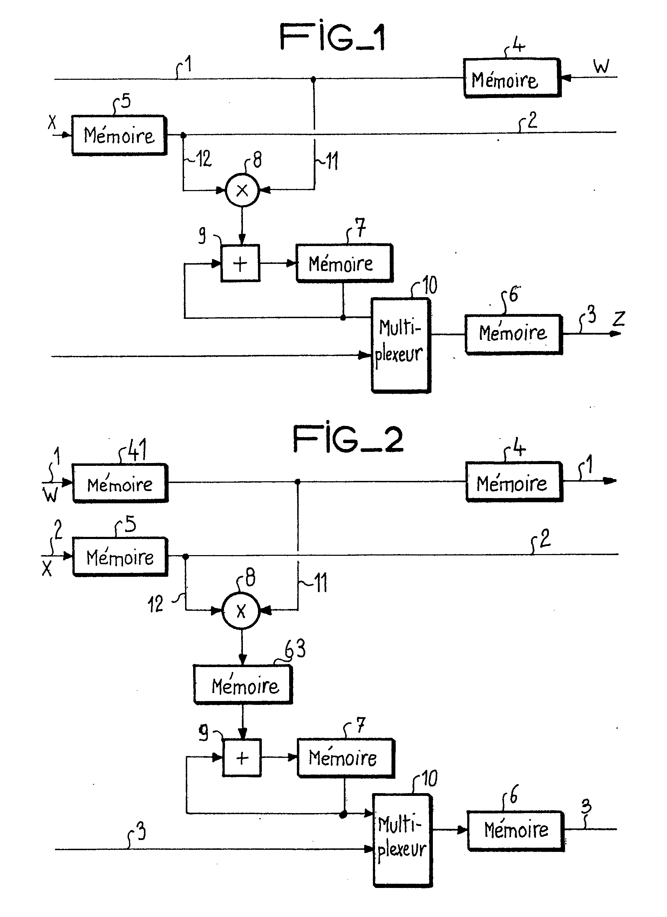

Sur les figures 1 à 10, on a utilisé les mêmes références pour désigner les mêmes éléments.

Sur la figure 1, on peut voir une cellule appelée R1. Les flots d'informations sont représentés par les lignes de connexions, notamment 1, 2 et 3. Les flèches indiquent le sens d'écoulement des flots. Le fonctionnement des cellules sera expliqué dans le cas d'un calcul de convolution, étant bien entendu que cette cellule peut servir à d'autres types de calculs.

Etant donné le noyau $W = w_1, w_2, \ldots, w_i, \ldots, w_k$ et un ensemble de cœfficients $X = x_1, x_2, \ldots, x_i, \ldots, x_n$, on désire calculer la suite des

$(n-k+1)$ $z_i$, avec $z_i = \sum\limits_{m}^{k} = 1\ w_m\ x_{i+m-1}$. Les nombres $x_i$, $w_i$ et $z_i$ sont des nombres binaires, k est le cardinal de W, n est le cardinal de X, i et m sont des indices. Les $x_i$ de X sont par exemple les valeurs numérisées d'échos radars. W permet un filtrage en donnant une forme de filtre.

Un cycle élémentaire d'une cellule correspond successivement à une multiplication, une addition et un rangement dans un registre mémoire. Tous les registres fonctionnent avec la même horloge, dont le temps de base correspond au temps du cycle élémentaire. A chaque temps de cycle, les éléments de W et de X se déplacent dans des sens opposés, mais à la même vitesse, respectivement sur des lignes 1 et 2, entre des registres mémoires respectivement 4 et 5 de cellules R1 mises en cascade, formant un circuit. Par la suite, les lignes 1 et 2 seront appelées lignes de données. Deux éléments consécutifs de X et de W doivent être séparés par deux temps de cycle. Ainsi les bons $x_i$ sont multipliés par les bons $w_i$ pour donner les $z_i$. La valeur zéro est intercalée entre deux éléments consécutifs de X et de W. Avantageusement, on exécute les calculs sur deux ensembles X et X' différents qui donnent deux suites $z_i$ et $z_i'$.

Avantageusement on coupe X et W en deux et l'on exécute l'entrelacement de deux moitiés de X et W. A la sortie du circuit systolique, on trie les valeurs, par exemple de la suite $z_1$, $z_{(n-k+1)/2}$, $z_2$, $z_{((n-k+1)/2)+1}$, $z_3$, ...

Un multiplieur 8 multiplie la valeur contenue dans le registre mémoire 5 par la valeur contenue dans le registre mémoire 4. Les éléments $x_i$ de X, et $w_i$ de W sont transmis au multiplieur 8 respectivement par des lignes 12 et 11. Le multiplieur 8 est par exemple du type combinatoire. Avantageusement, le multiplieur 8 est du type du multiplieur décrit dans la demande de brevet en France n° 82 21 627 déposée le 23 Décembre 1982 par la demanderesse. Le résultat de la multiplication est ajouté par un additionneur 9 à la valeur contenue dans un registre mémoire 7 qui contient les précédents termes de la somme donnant $z_i$. A la dernière valeur $w_k$ de W, est associée un bit de commande r, qui commande la transmission du contenu du registre mémoire 7 à un registre mémoire 6 placé sur la ligne 3 des résultats $z_i$ et remet le registre mémoire 7 à zéro. La valeur $w_k$ travers successivement toutes les cellules et le bit de commande associé déclenche cette opération dans chaque cellule.

Par la suite, cette ligne 3 sera appelée ligne des résultats.

Un multiplexeur 10 transmet alternativement au registre 6 les valeurs contenues dans le registre 7 et les valeurs contenues dans le registre 6 de la cellule R1 précédente, transmises par la ligne 3.

Dans la cellule R1, comme d'ailleurs dans la cellule R2 illustrée par la figure 2, chaque résultat partiel de calcul de $z_i$ reste dans une cellule et les éléments $w_i$ et $x_i$ se déplacent dans le circuit. Le nombre total de cellules nécessaires est alors égal au nombre de résultats désirés. Les cellules R1 et R2 sont bien adaptées au calcul de fonction de corrélation.

Sur la figure 2, on peut voir une cellule appelée R2. La cellule R2 a une structure semblable à la cellule R1, mais comporte sur la ligne de données 1 deux registres mémoires 4 et 41. De plus, les éléments de W et de X se déplacent dans le même sens. Grâce à la présence de deux registres mémoires 4 et 41 sur la ligne de données 1, le flot des éléments de W est deux fois moins rapide que le flot des éléments de X. Ainsi, à chaque temps de cycle, on obtient la valeur $z_i$ désirée et ceci sans entrelacer deux suites.

Dans une variante de réalisation, la cellule R2 comporte un registre mémoire 63 entre le multiplieur 8 et l'additionneur 9, retardant d'un cycle d'horloge l'addition de la valeur sortant du multiplieur 8 et celle contenue dans le registre mémoire 7.

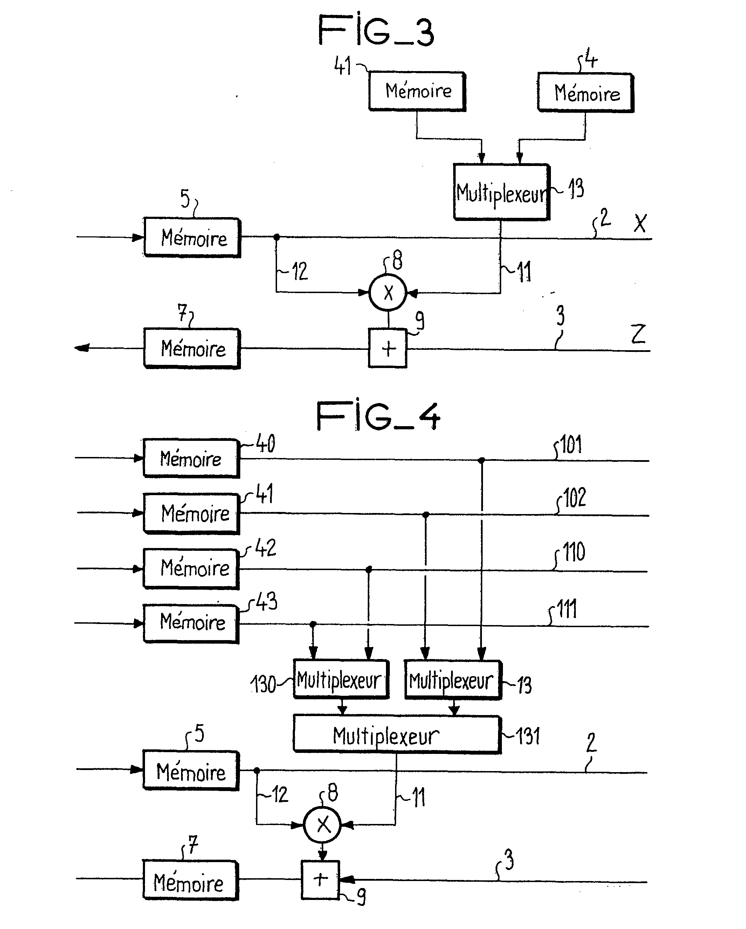

Sur la figure 3, on peut voir une cellule appelée W1.

A chaque temps de cycle, les éléments $x_i$ de X et les résultats $z_i$ se déplacent dans des sens opposés mais à la même vitesse, respectivement sur les lignes 2 et 3 entre des registres respectivement 5 et 7 des cellules W1.

Pour la cellule W1 comme pour la cellule R1, deux éléments consécutifs de X doivent être séparés par deux temps de cycle. Avantageusement, pour exécuter les calculs sur deux ensembles W et W', la cellule W1 comporte deux registres mémoires 4 et 41 contenant deux éléments $w_i$ et $w_i'$ de W et de W'. Un multiplexeur 13 transmet alternativement le contenu du registre 4 et 41.

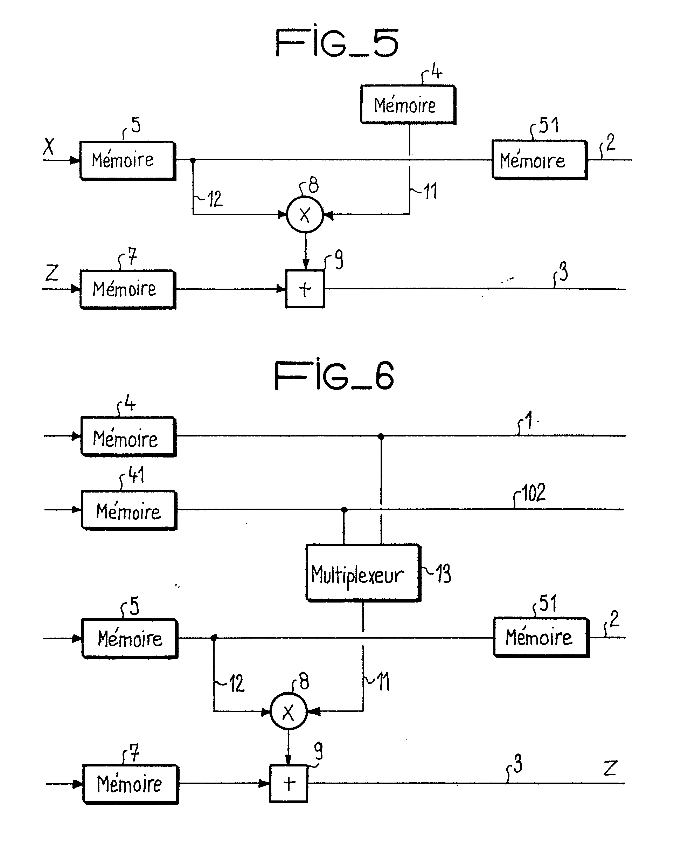

Pour le calcul de convolution, les éléments $w_i$ de W restent dans la même cellule. Il en est de même pour la cellule W2 représentée sur la figure 5. Avantageusement, on effectue le préchargement des registres 4 et 41 par des lignes de transmission d'informations pendant une interruption du calcul.

Sur la figure 4, on peut voir une variante de réalisation de la cellule W1. Cette cellule conserve les possibilités de calculs de convolution d'une cellule W1 de type connu, tout en améliorant les performances pour le calcul de corrélation.

Chaque élément $z_i$ de la suite Z, fonction d'intercorrélation des suites X et W, est obtenu par sommation de résultats partiels par rebouclage dans le circuit comportant les cellules W1 montées en cascade. Des lignes de données 101 et 102 permettend de charger des valeurs dans un des registre mémoires 40 ou 41, l'autre étant utilisé pour le calcul; la commutation est faite par un multiplexeur 13.

Dans une variante de réalisation, la cellule W1 comprend deux lignes supplémentaires 110 et 111 comportant respectivement des registres mémoires 42 et 43 ainsi qu'un multiplexeur 130. Avec cette variante de la cellule W1, on peut exécuter les calculs de corrélation de la suite X avec par exemple deux suites W et W', le choix étant fait grâce au multiplexeur 131.

Sur la figure 5, on peut voir une cellule appelée W2. Les éléments $x_i$ de X et les résultats $z_i$ se déplacent dans le même sens. Les résultats $z_i$ se déplacent deux fois plus vite que les éléments $x_i$ et X, du fait que la ligne 2 des éléments $x_i$ de X comprend deux registres mémoires 5 et 51. Ainsi on obtient un résultat $z_i$ à chaque temps de cycle.

La cellule W2 est particulièrement intéressante pour le calcul de convolution.

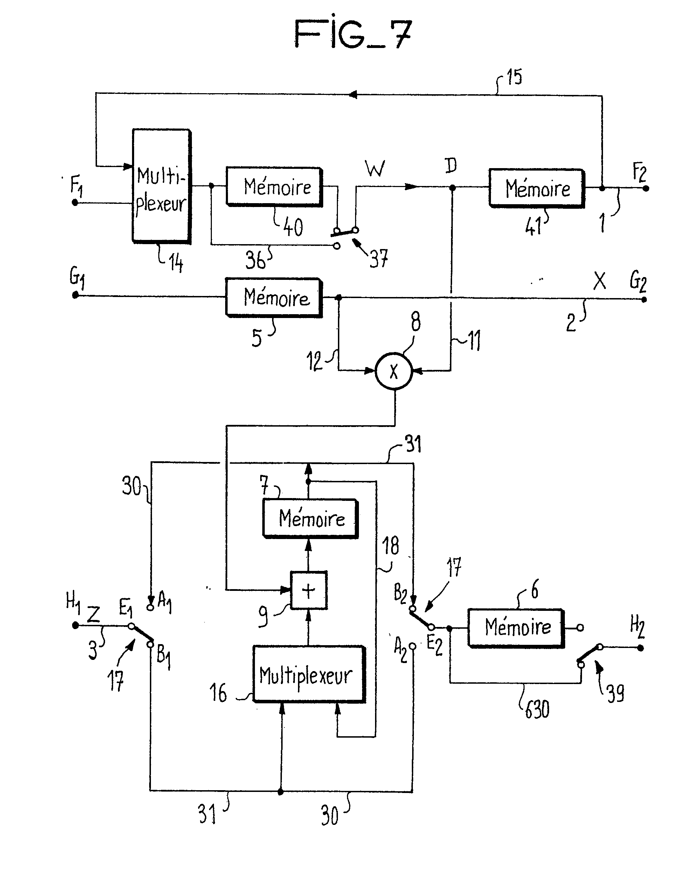

Sur la figure 6, on peut voir une variante de réalisation de la cellule W2 adaptée au calcul de corrélation.

Cette cellule comprend notamment deux lignes de données 1 et 102 comportant respectivement les registres mémoires 4 et 41 ainsi qu'une ligne de données 2 comportant les registres mémoires 5 et 51. Un multiplexeur 13 transmet alternativement les valeurs contenues dans les registres mémoires 4 et 41.

Sur la figure 7, on peut voir une cellule appelée RW qui, par un jeu de commutations internes, peut jouer le rôle des cellules R1, R2, W1 et W2.

Cette cellule est donc construite pour le calcul de convolution, de fonction de corrélation et de filtrage autorégressif.

La cellule RW comprend une ligne de données 1 comportant deux registres mémoires 40 et 41. Une ligne 15 relie la sortie du registre mémoire 41 à un multiplexeur 14 placé à l'entrée du registre mémoire 40.

Le point D de la linge de données 1, intermédiaire entre le registre mémoire 40 et le registre mémoire 41, est relié au multiplieur 8 par une ligne 11. La ligne 2 comporte le registre mémoire 5. La ligne 2 est reliée au multiplieur 8 par la ligne 12. Le multiplieur 8 est relié à l'additionneur 9. L'additionneur 9 est relié au registre mémoire 7. Le registre mémoire 7 est relié par une ligne 30 au point $A_1$ et par une ligne 31 au point $B_2$. L'entrée d'un multiplexeur 16 est reliée par une ligne 31 au point $B_1$ et par une ligne 30 au point $A_2$. Deux lignes sont numérotées 30 et 31 car le point $A_2$ est relié au point $A_1$ par l'intermédiaire des lignes 30 ou le point $B_1$ au point $B_2$ par l'intermédiaire des lignes 31. D'autre part, la sortie du registre mémoire 7 est reliée à une entrée du multiplexeur 16 par une ligne 18. Une sortie du multiplexeur 16 est reliée à l'additionneur 9.

Dans une variante de réalisation, la ligne 3 comporte un registre mémoire 6. Un commutateur 39 permet d'éviter le registre mémoire 6, en passant par la ligne 630.

Aux points $E_1$ et $E_2$, la ligne 3 comporte des commutateurs 17, permettant de relier respectivement des points $E_1$ et $E_2$ aux points $A_1$ et $A_2$ ou aux points $B_1$ et $B_2$.

Pour faire jouer le rôle d'une cellule W1 à cellule RW, on relie le point $E_1$ au point $A_1$ et le point $E_2$ au point $A_2$. Le flot des données dans la ligne 3 part du point $E_2$ vers le point $E_1$, à travers les lignes 30, le multiplexeur 16, l'additionneur 9 et le registre mémoire 7. Pour obtenir alternativement deux valeurs par exemple d'éléments wi et w'i de W et W', on boucle la sortie du registre mémoire 41 sur l'entrée du registre de mémoire 40 par l'intermédiaire de la ligne 15 et du multiplexeur 14.

Pour faire jouer le rôle d'une cellule W2 à la cellule RW, on relie le point $E_1$ au point $B_1$ et le point $E_2$ au point $B_2$.

Le flot des données dans la ligne 3 va du point $E_1$ vers le point $E_2$ en traversant les lignes 31, le multiplexeur 16, l'additionneur 9 et le registre mémoire 7. La ligne 1 de la figure 7 joue le rôle de la ligne 2 de la figure 5. Le registre mémoire 6 est court-circuité grâce au commutateur 39.

Pour faire jouer le rôle d'une cellule R2 à la cellule RW, le point $E_2$ est relié au point $B_2$. Le multiplexeur 16 reboucle la sortie du registre mémoire 7 sur l'additionneur 9.

Dans une variante de réalisation, la cellule RW selon l'invention comporte une ligne 36 et un commutateur 37 permettant d'éviter le registre mémoire 40 de la ligne des données 1 pour faire jouer à la cellule RW le rôle de la cellule R1.

Pour effectuer le calcul des fonctions de corrélation, les cellules R1 et R2 sont les mieux adaptées. Mais ces deux cellules sont pénalisées par un deuxième registre mémoire 6 sur la ligne 3 des résultats, ce qui augmente le temps de calcul. Mais le registre mémoire 6 ne sert qu'à faire sortie les résultats $z_i$. Or, dans la plupart des cas, dans le calcul des fonctions de corrélation, le nombre des termes sommés et donc le temps de calcul est grand devant le nombre de résultats calculés.

Dans un tel cas, on peut arrêter les calculs pour sortir les résultats $z_i$, ce qui correspond à éviter le registre mémoire 6 par la ligne 630 grâce au commutateur 39.

L'entrée de chaque cellule RW comporte respectivement sur les lignes 1, 2 et 3 des points $F_1$, $G_1$, $H_1$ et les sorties des points $F_2$, $G_2$, $H_2$. La cellule RW selon l'invention est cascadable. On relie entre elles les lignes 1, 2 et 3 des cellules successives. Ainsi les points $F_2$, $G_2$, $H_2$ d'une cellule sont connectés, respectivement aux points $F_1$, $G_1$, $H_1$ de la cellule suivante.

Les commutateurs 17, 37 et 39 comprennent par exemple des bascules bistables.

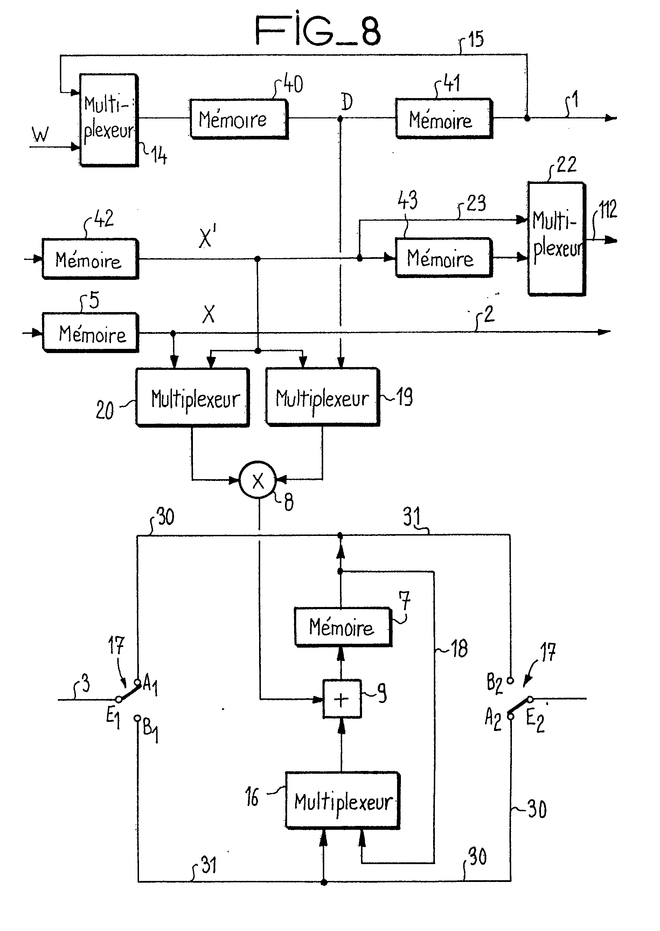

Sur la figure 8, on peut voir une variante de réalisation de la cellule RW permettant le calcul bidimensionnel. Dans le cas de la convolution par exemple, on se propose de calculer la suite des $z_{ij}$ avec

$$z_{ij} = \sum_{q=1}^{Q} \sum_{l=1}^{L} w_{q,1} \, x_{i+q-1, \, j+1-1}$$

i et q étant des indices de lignes et j et l étant des indices de colonnes. L'ensemble W des $w_{ij}$ se présente donc sous forme d'une matrice de dimensions QxL.

Une architecture traitant en parallèle Q chaînes de cellules est limitée par le temps d'accès t à la mémoire contenant les données. Dans ce cas, t doit être tel que $t < 1/Q$. On a choisi de s'orienter vers une structure monodimensionnelle du circuit systolique, pour laquelle les données ne sont pas admises en parallèle mais en série. Or, pour le calcul de convolution comme décrit dans «Hardware pipelines for multi-dimentional convolution and resampling» de H.T. Kung et R.L. Picard, IEEE Computer Society Workshop on computer architecture for pattern analysis and image database management nov 1981, il est avantageux d'entrelacer les calculs relatifs à l'obtention des résultats de Q lignes successives de la matrice X. Les Q flots de données correspondant aux Q lignes de résultats sont entrés en parallèle dans le circuit, chaque flot étant en retard d'un cycle sur le flot de la ligne supérieure afin que chaque cellule puisse travailler, en temps partagé, à l'élaboration des résultats de Q lignes. Ainsi décalées, les données présentes dans une cellule ne peuvent prendre au maximum que deux valeurs différentes. Ainsi la cellule RW selon l'invention comporte notamment une ligne supplémentaire 112 des données $x_i$.

La gestion des flots au niveau de chaque cellule est effectuée par des multiplexeurs 19 et 20. Une cellule utilise les données provenant d'un flot pendant Q cycles consécutifs, correspondant à une colonne de données, puis bascule sur l'autre flot pendant les Q cycles suivants. Les résultats sont recueillis sous la forme de colonnes de longueur Q. Pour effectuer la commande des commutations, on associe aux éléments $w_i$ de W et au $z_i$ un bit de contrôle $B_S$ qui se déplace de manière identique, tandis qu'aux $x_i$ de X, on associe un bit de contrôle $B_X$. On obtient $P = B_X . B_S + B_S . P^{-1}$ où $P^{-1}$ représente la valeur de P au cycle précédent. Ainsi P est égal à zéro, tous les cycles différents d'un multiple de Q. Pour les cycles multiples de Q, P est égal à 1. Le nombre N des cellules RW doit être égal ou supérieur au nombre des éléments de la matrice des données W, égal à Q x L. Si N > QxL, on forme une matrice constituée de la matrice de données complétée par des 0 pour que la taille de la nouvelle matrice Q' × L' soit égale à N. La cellule RW pour calcul bidimensionnel selon l'invention comprend une ligne de données 1 comportant deux registres mémoires 40 et 41. La sortie du registre mémoire 41 est reliée à l'entrée du registre mémoire 40 par l'intermédiaire de la ligne 15 et du multiplexeur 14. La ligne 112 comporte deux registres mémoires 42 et 43. Le registre mémoire 43 peut être évité par l'intermédiaire de la ligne 23 et du multiplexeur 22. La ligne 2 comporte un registre mémoire 5. Les lignes 1 et 112 sont connectées à une entrée du multiplieur 8 par l'intermédiaire du multiplexeur 19. Les lignes 2 et 112 sont connectées à une autre entrée du multiplieur 8 par l'intermédiaire du multiplexeur 20. Le circuit multiplieur 8 est relié à l'entrée d'un circuit additionneur 9. La sortie du circuit additionneur 9 est reliée à un registre mémoire 7. Le registre mémoire 7 est relié respectivement aux points $A_1$ et $B_2$ par les lignes 30 et 31. Le registre mémoire 7 est relié par l'intermédiaire de la ligne 18 au multiplexeur 16. Le multiplexeur 16 est, d'autre part, relié respectivement aux points $A_2$ et $B_1$ par les lignes 30 et 31. Les points $A_1$ ou $B_1$ et $A_2$ ou $B_2$ sont reliés respectivement aus points $E_1$ et $E_2$ de la ligne 3 par des commutateurs 17.

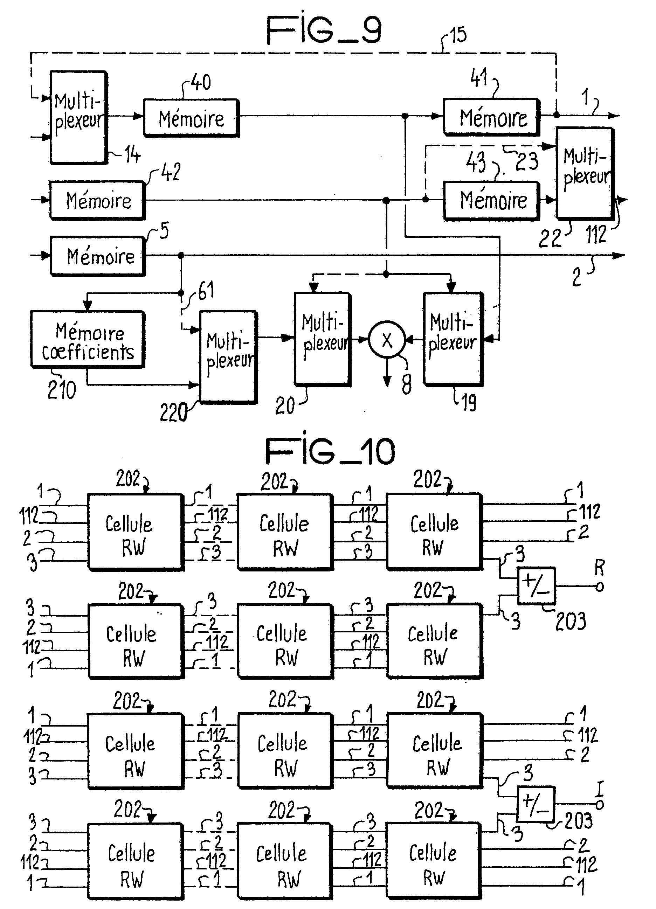

Pour le calcul de convolution bidimensionnelle, où les éléments $w_i$ de W restent dans les cellules, une cellule du type W2 est la mieux adaptée. Cette structure est obtenue avec la cellule RW de la figure 9 par un jeu de commutations internes. Le multiplexeur 14 coupe la ligne 15. Le multiplexeur 22 coupe la ligne 23. Le multiplexeur 20 coupe la connexion de la ligne 112 à l'entrée du circuit multiplieur 8 à laquelle est connectée la ligne 2.

Pour le calcul de convolution, avec deux jeux d'éléments $w_i$ de W et $w'_i$ de W', la cellule la mieux adaptée a une structure de type W1. Ce type de calcul trouve des applications notamment pour le traitement d'images lorsqu'il s'agit d'effectuer des calculs de gradient. Pour obtenir ce tpye de cellule à partir de la cellule RW, le multiplexeur 22 détourne les données du registre mémoire 43 par la ligne 23. Le multiplexeur 19 coupe la connexion de la ligne 112 à l'entrée du circuit 8 à laquelle est connectée la ligne 1.

Pour réaliser une structure de type R2 à partir de la cellule RW, le multiplexeur détourne les données du registre mémoire 43 par la ligne 23. Le multiplexeur 19 coupe la connexion de la ligne 112 à l'entrée du ciruit multiplieur 8 à laquelle est connectée la ligne 1. Le multiplexeur 14 coupe la ligne 1.

Sur la figure 9, on peut voir une partie d'une variante de réalisation de la cellule RW selon l'invention comportant une mémoire 210 de coefficients. Certaines lignes de données sont appelées deux fois lors du calcul de deux groupes adjacents de Q lignes de résultats. Ainsi les Q-1 dernières lignes de données participant au calcul d'un groupe de Q lignes de résultats sont à nouveau utilisées pour le groupe suivant. Les placer dans la mémoire 210 permet de diminuer le temps d'accès, tout en simplifiant l'adressage. La mémoire de coefficients 210 est placée sur la ligne reliant la ligne 2 au multiplexeur 20. Un multiplexeur 220 et une ligne 61 permettent d'éviter la mémoire de coefficients 210. Sur la figure 9, les liaisons coupées sont représentées en pointillés. La cellule RW sur la figure 9 a une structure de type W2. La mémoire de coefficients 210 facilite les calculs de convolution dans lesquels les éléments $w_i$ de W doivent changer durant le calcul. Ces calculs sont particulièrement intéressants pour le traitement de modifications géométriques d'images par interpolation ou rééchantillonnage. La mémoire de coefficients 210 de chaque cellule RW est chargée préalablement au traitement et les adresses se propagent par exemple par la ligne 1. Ainsi, le rythme de changement des éléments $w_i$ de W au sein d'une même cellule peut être identique à celui des $x_i$ de X tout en évitant les résultats erronés dûs à un mauvais postionnement entre les éléments $x_i$ de X et $w_i$ de W.

Une variante de réalisation des cellules RW des figures 7, 8 et 9 comprend, entre le circuit multiplieur 8 et le circuit additionneur 9, un registre mémoire et une ligne placée en parallèle aboutissant à un multiplexeur permettant de passer par le registre mémoire ou d'éviter ce registre mémoire.

Sur la figure 10, on peut voir une variante de réalisation du circuit selon l'invention permettant d'effectuer des calculs sur des nombres complexes. Pour ce faire, le circuit comprend deux paires de séries de cellules 202 selon l'invention. En effet,

$$\sum_m (A^m_r + j) A^m_i)(B^m_r + j B^m_i) =$$

$$\sum_m A^m_r B^m_r - \sum_m A^m_i B^m_i + j \sum_m A^m_r B^m_i + \sum_m A^m_i B^m_r$$

$A_r$ et $B_r$ étant les parties réelles et $A_i$ et $B_i$ les parties imaginaires des nombres A et B. Dans chaque série, les cellules sont connectées en cascade. Les lignes de résultats 3 de chaque série sont reliées à des additionneurs/soustracteurs 203.

Pour des calculs utilisant le même noyau W, il est intéressant, à la place d'accéder à une mémoire externe à chaque début de calcul, de reboucler la sortie sur l'entrée. Pour que $w_1$, suive $w_k$ on place à la sortie, par exemple, des registres mémoires.

Avantageusement, le circuit selon l'invention comprend des circuits intégrés.

Avantageusement, le circuit selon l'invention est un circuit intégré.

L'invention s'applique notamment au traitement des informations reçues par un radar.

Les informations à traiter doivent être sous forme numérique par exemple sous forme de nombre de 16 bits.

## Revendications

1. Cellule de calcul caractérisée par le fait qu'elle comprend une ligne de données transmettant des informations (1) comportant deux registres mémoires (40, 41); une ligne (15) relie la sortie d'un de ces registres mémoires (41) à un multiplexeur (14) placé à l'entrée de l'autre registre mémoire (40) de la ligne de transmission d'informations (1); une ligne (11) relie un point intermédiaire (D) entre lesdits registres mémoires à un multiplieur (8); une autre ligne de données (2) comportant un registre mémoire (5) est reliée à une autre entrée du multiplieur (8); le multiplieur (8) est relié à l'additionneur (9), l'additionneur (9) est relié à un registre mémoire (7) qui est lui-même relié par deux lignes de transmission d'informations (30, 31), à deux commutateurs (17) effectuant la connexion avec une ligne de transmission d'informations (3), le registre mémoire (7) se trouvant à la sortie de l'additionneur (9) est relié à un multiplexeur (16) constituant une entrée de l'additionneur (9), ce multiplexeur (16) est relié par des lignes de transmission d'informations (30, 31), auxdits commutateurs (17).

2. Cellule de calcul selon la revendicaton, 1, caractérisée par le fait qu'elle comprend en plus une ligne de transmission d'informations (112) comportant deux registres mémoires (42, 43), un de ces registres mémoires étant évité par l'intermédiaire d'une ligne de transmission d'informations (23) et par un multiplexeur (22); un premier multiplexeur (20) relie la ligne de transmission d'informations (2) comportant un registre mémoire (5) à une entrée du multiplieur (8); un second multiplexeur (19) relie la ligne de transmission d'informations (112) supplémentaire et la ligne de transmission d'informations (1) comportant deux registres mémoires (40, 41) à une autre entrée de multiplieur (8).

3. Cellule de calcul selon la revendication 2, caractérisée par le fait qu'elle comprend en plus une mémoire (210) placée entre la ligne de transmission d'information (2) comportant un registre mémoire (5) et le multiplexeur (20) se trouvant à une entrée du multiplieur (8); une ligne (61) et un multiplexeur (220) permettent d'éviter la mémoire (21).

4. Cellule de calcul selon l'une quelconque des revendications 1, 2 ou 3, caractérisée par le fait que la ligne qui relie le multiplieur (8) à l'additionneur (9) comporte un registre mémoire.

5. Cellule de calcul selon l'une quelconque des revendications 1, 2, 3 ou 4, caractérisée par le fait que la ligne de transmission d'information (3) reliée aux commutateurs (17) comporte un registre mémoire (6); une ligne (630) et un commutateur ou un multiplexeur (39) permettent d'éviter ce registre mémoire (6).

6. Cellule de calcul selon l'une quelconque des revendications 1, 2, 3, 4 ou 5, caractérisée par le fait qu'elle comporte une ligne (36) et un commutateur (37) permettant d'éviter un des deux registres mémoires (40, 41) de la ligne de données (1).

7. Circuit électrique caractérisé par le fait qu'il comprend au moins une cellule de calcul selon l'une quelconque des revendications 1, 2, 3, 4, 5 ou 6.

8. Circuit électrique caractérisé par le fait qu'il comprend au moins une série des cellules selon l'une quelconque des revendications 1, 2, 3, 4, 5 ou 6, connectées en cascade.

9. Circuit électrique caractérisé par le fait qu'il comprend deux paires de séries de cellules selon l'une quelconque des revendications 1, 2, 3, 4, 5 ou 6, des additionneurs/soustracteurs (203) étant connectés aux sorties des lignes de transmission d'informations (3) de chaque série de cellules.

10. Circuit électrique selon l'une quelconque des revendications 7, 8 ou 9, caractérisé par le fait que ce circuit est un circuit intégré.

## Patentansprüche

1. Rechenzelle, dadurch gekennzeichnet, dass sie eine informationsübertragende Datenstrecke (1) mit zwei Speicherregistern (40, 41) enthält, dass eine Strecke (15) den Ausgang eines dieser Speicherregister (41) an einen Multiplexer (14) anschliesst, der am Eingang des anderen Speicherregisters (40) der Informationsübertragungsstrecke (1) liegt, während eine Strecke (11) einen Zwischenabgriff (D) zwischen diesen Speicherregistern mit einem Multiplizierer (8) verbindet, dass eine weitere Datenstrecke (2) mit einem Speicherregister (5) an einen weiteren Eingang des Multiplizierers (8) angeschlossen ist, dass der Multiplizierer (8) an den Addierer (9) und der Addierer (9) an ein Speicherregister (7) angeschlossen ist, das seinerseits über zwei Informationsübertragungsstrecken (30, 31) an zwei Umschalter (17) angeschlossen ist, die die Verbindung mit einer Informationsübertragungsstrecke (3) herstellen, wobei das Speicherregister (7), das sich am Ausgang des Addierers (9) befindet, mit einem Multiplexer (16) verbunden ist, der einen Eingang des Addierers (9) bildet und über Informationsübertragungsstrecken (30, 31) mit den Umschaltern (17) verbunden ist.

2. Rechenzelle nach Anspruch 1, dadurch gekennzeichnet, dass sie ausserdem eine Informationsübertragungsstrecke (112) mit zwei Speicherregistern (42, 43) enthält, von denen das eine über eine Informationsübertragungsstrecke (23) und einen Multiplexer (22) umgangen wird, dass ein erster Multiplexer (20) die Informationsübertragungsstrecke (2), die ein Speicherregister (5) enthält, an einen Eingang des Multiplizierers (8) anschliesst und ein zweiter Multiplexer (19) die zusätzliche Informationsübertragungsstrecke (112) und die Informationsübertragungsstrecke (1), die die beiden Speicherregister (40, 41) enthält, an einen anderen Eingang des Multiplizierers (8) anschliesst.

3. Rechenzelle nach Anspruch 2, dadurch gekennzeichnet, dass sie ausserdem einen Speicher (210) aufweist, der zwischen der Informationsübertragungsstrecke (2), die ein Speicherregister (5) enthält, und den Multiplexer (20) eingefügt ist, der sich an einem Eingang des Multiplizierers (8) befindet, wobei eine Strecke (61) und ein Multiplexer (220) die Umgehung des Speichers (21) erlauben.

4. Rechenzelle nach einem beliebigen der Ansprüche 1, 2 oder 3, dadurch gekennzeichnet, dass die Strecke, die den Multiplizierer (8) mit dem Addierer (9) verbindet, ein Speicherregister enthält.

5. Rechenzelle nach einem beliebigen der Ansprüche 1, 2, 3 oder 4, dadurch gekennzeichnet, dass die Informationsübertragungsstrecke (3), die an die Umschalter (17) angeschlossen ist, ein Speicherregister (6) enthält, wobei eine Strecke (630) und ein Umschalter oder ein Multiplexer (39) die Umgehung dieses Speicherregisters (6) erlauben.

6. Rechenzelle nach einem beliebigen der Ansprüche 1, 2, 3, 4 oder 5, dadurch gekennzeichnet, dass sie eine Strecke (36) und einen Umschalter (37) aufweist, mit denen eines der Speicherregister (40, 41) der Datenstrecke (1) umgangen werden kann.

7. Elektrischer Kreis, dadurch gekennzeichnet, dass er mindestens eine Rechenzelle nach einem beliebigen der Ansprüche 1, 2, 3, 4, 5 oder 6 enthält.

8. Elektrischer Kreis, dadurch gekennzeichnet, dass er mindestens eine Reihe von Zellen nach einem beliebigen der Ansprüche 1, 2, 3, 4, 5 oder 6 in Kaskadenschaltung enthält.

9. Elektrischer Kreis, dadurch gekennzeichnet, dass er zwei Paare von Reihen von Zellen nach einem beliebigen der Ansprüche 1, 2, 3, 4, 5 oder 6 enthält, wobei Addierer/Subtrahierer (203) an die Ausgänge der Informationsübertragungsstrecken (3) jeder Reihe von Zellen angeschlossen sind.

10. Elektrischer Kreis nach einem beliebigen der Ansprüche 7, 8 und 9, dadurch gekennzeichnet, dass dieser Kreis ein integrierter Schaltkreis ist.

## Claims

1. A calculation cell, characterized in that it comprises a data line for transmitting informations (1) including two storage registers (40, 41), a line (15) connects the output of one of these storages registers (41) to a multiplexer (14) placed at the input of the second storage register (40) of the information transmission line (1), a line (11) connects a point (D) intermediate between said storage registers to a multiplier (8), another data line (2) including a storage register (5) is connected to another input of the multiplier (8), the multiplier (8) is connected to the adder (9), the adder (9) is connected to a memory register (7), which itself is connected via two information transmission lines (30, 31) to two switches (17) ensuring the connection with an information transmission line (3), the storage register (7) which is located at the output of the adder (9) is connected to a multiplexer (16) constituting an input of the adder (9), this multiplexer (16) is connected via information transmission lines (30, 31) to said switches (17).

2. A calculation cell according to claim 1, characterized in that it further comprises an information transmission line (112) including two storage registers (42, 43), one of these storage registers being by-passed via an information transmission line (23) and a multiplexer (22), a first multiplexer (20) connects the information transmission line (2) including a storage register (5) to an input of the multiplier (8), a second multiplexer (19) connects the additional information transmission line (112) and the information transmission line (1) including two storage registers (40, 41) to another input of the multiplier (8).

3. A calculation cell according to claim 2, characterized in that it further comprises a memory (210) interposed between the information transmission line (2) including a storage register (5), and the multiplexer (20) which is situated at an input of the multiplier (8), a line (61) and a multiplexer (220) allowing to by-pass the memory (21).

4. A calculation cell according to any one of claims 1, 2 or 3, characterized in that the line which connects the multiplier (8) to the adder (9) comprises a storage register.

5. A calculation cell according to any one of claims 1, 2, 3 or 4, characterized in that the information transmission line (3) connected to the switches (17) comprises a storage register (6), a line (630) and a switch or a multiplexer (39) allowing to by-pass this storage register (6).

6. A calculation cell according to any one of claims 1, 2, 3, 4 or 5, characterized in that it comprises a line (36) and a switch (37) allowing to by-pass one of the two storage registers (40, 41), of the data line (1).

7. An electric circuit, characterized in that it comprises at least one calculation cell according to any one of claims 1, 2, 3, 4, 5 or 6.

8. An electric circuit, characterized in that it comprises at least one series of cells according to any one of claims 1, 2, 3, 4, 5 or 6 in cascade connection.

9. An electric circuit, characterized in that it comprises two pairs of series of cells according to any one of claims 1, 2, 3, 4, 5 or 6, adders/subtractors (203) being connected to the outputs of the information transmission lines (3) of each series of cells.

10. An electric circuit according to any one of claims 7, 8 or 9, characterized in that this circuit is an integrated circuit.

# FIG_1

# FIG_2

2/6

# FIG_3

# FIG_4

3/6

# FIG_5

# FIG_6

4/6

# FIG_7

5/6

# FIG_8

6/6

## FIG_9

## FIG_10